Europäisches Patentamt

European Patent Office

Office européen des brevets

(11) Veröffentlichungsnummer: **0 204 783 B1**

# (12) EUROPÄISCHE PATENTSCHRIFT

(45) Veröffentlichungstag der Patentschrift: **20.05.92**

(21) Anmeldenummer: **86900113.1**

(22) Anmeldetag: **07.12.85**

(86) Internationale Anmeldenummer:
**PCT/EP85/00684**

(87) Internationale Veröffentlichungsnummer:
**WO 86/03580 (19.06.86 86/13)**

(51) Int. Cl.⁵: **G01B 7/30**, G01D 5/04

(54) WINKELGEBER.

(30) Priorität: **12.12.84 DE 3445243**

(43) Veröffentlichungstag der Anmeldung:
**17.12.86 Patentblatt 86/51**

(45) Bekanntmachung des Hinweises auf die
Patenterteilung:
**20.05.92 Patentblatt 92/21**

(84) Benannte Vertragsstaaten:
**AT CH DE FR GB IT LI NL SE**

(56) Entgegenhaltungen:
**DE-A- 3 212 149**
**FR-A- 2 337 045**
**US-A- 3 253 260**
**US-A- 3 679 922**
**US-A- 3 772 675**

**Patents Abstracts of Japan, vol. 6, No. 188,**
**(P-144)(1066) 28 September 1982 & JP, A,**
**5798801**

(73) Patentinhaber: **Fernsteuergeräte Kurt Oelsch
GmbH
Jahnstrasse 68-72
W-1000 Berlin 47(DE)**

(72) Erfinder: **SCHULZ, Klaus
Ilgenweg 11a
W-1000 Berlin 47(DE)**

(74) Vertreter: **Wolgast, Rudolf, Dipl.-Chem. Dr. et
al
Dipl.-Phys. Jürgen Weisse Dipl.Chem. Dr. Rudolf Wolgast Bökenbusch 41 Postfach 11 03
86
W-5620 Velbert 11 Langenberg(DE)**

## Beschreibung

### Technisches Gebiet

Die Erfindung betrifft einen Winkelgeber, enthaltend

(a) ein flaches Gehäuse,

(b) einen in dem flachen Gehäuse angeordneten Stator mit einer auf einem Kreisbogen gewickelten Spule,

(c) einen in dem Gehäuse relativ zu dem Stator drehbar gelagerten Rotor mit einem Anker, der mit der Spule des Stators zur Erzeugung eines drehwinkelabhängigen Ausgangssignals über einen begrenzten Winkelbereich zusammenwirkt,

(d) eine Eingangswelle und

(e) ein Untersetzungsgetriebe, über welches die Eingangswelle mit dem Rotor gekuppelt ist.

### Zugrunde liegender Stand der Technik

Durch die DE-OS 32 12 149 ist ein Winkelgeber bekannt, bei welchem der Stator eine auf einem Kreisbogen gewickelte Spule mit Mittenanzapfung enthält. Die Spule sitzt auf einem ringförmigen Kern aus unmagnetischem Material von im wesentlichen rechteckigem Querschnitt. In die Innen- und die Außenfläche des ringförmigen Kerns sind Streifen aus magnetischem Material eingesetzt. Dieser Stator sitzt in einem flachen, dosenförmigen Gehäuse. In dem Gehäuse ist der Rotor mit einer Welle gelagert. Der Rotor ist als Drehteil mit einer Scheibe und zwei längs deren Umfangs verlaufenden koaxialen Rippen ausgebildet. Die Rippen umgreifen die Spule von innen und von außen. Der Rotor ist aus unmagnetischem Material hergestellt. In die Außenseite der inneren Rippe und die Innenseite der äußeren Rippe, die der Spule zugewandt sind, sind Streifen aus ferromagnetischem Material eingelassen. Diese Streifen erstrecken sich über einen Teil des Umfangs. Die ferromagnetischen Streifen beeinflussen das Streufeld und bewirken bei einer Verdrehung des Rotors eine Veränderung der Induktivitäten der beiderseits der Mittenanzapfung gebildeten Spulenteile. Eine Schaltungsanordnung spricht auf diese Änderungen zur Bildung eines Winkelsignals an. Der Rotor ist bei dem bekannten Winkelgeber zwar durchdrehbar. Ein dem Drehwinkel proportionales Winkelsignal ist jedoch nur in einem begrenzten Winkelbereich von beispielsweise 90° erzielbar.

Aus diesem Grunde hat man den bekannten Winkelgeber mit einem Untersetzungsgetriebe versehen. Eine Eingangswelle ist über ein solches Untersetzungsgetriebe mit dem Rotor gekoppelt. Die Eingangswelle mit dem Getriebe sitzt dabei in einem gesonderten Gehäuse, das an das besagte flache Gehäuse der DE-AS 32 12 149 angesetzt wird. Die Abtriebswelle dieses Getriebes ist mit der den Rotor tragenden Welle gekuppelt. Es kann dann die Eingangswelle über 360° oder im Bedarfsfall sogar um einen größeren Winkel verdreht werden, während sich der Rotor in dem Bereich bewegt, in welchem ein lineares Winkelsignal erhalten wird. Die Schaltungsanordnung, die auf die Änderungen der Induktivitäten der beiden Spulenteile zur Bildung des Winkelsignals anspricht, ist bei einer praktisch ausgeführten bekannten Anordnung nach Art der DE-A-32 12 149 ebenfalls in einem gesonderten, an das flache Gehäuse des eigentlichen Winkelgebers angesetzten Gehäuse untergebracht.

Es ergeben sich damit relativ große axiale Abmessungen der Gesamtanordnung, die für viele Anwendungen unerwünscht sind.

Das gleiche Problem tritt auch bei Winkelgebern auf, die nach einem anderen Prinzip arbeiten, beispielsweise bei Winkelgebern, bei denen ein Anker mit einem Kern aus weichmagnetischem Werkstoff mehr oder weniger weit in bogenförmig gewickelte Spulenteile hineingreift und bei einer Drehbewegung des Ankers aus einer Mittellage der Kern weiter in die eine Spulenhälfte hinein- und dafür entsprechend aus der anderen Spulenhälfte herausbewegt wird.

Durch die DE-A-3 325 318 ist ein inkrementaler Winkelkodierer mit einer Einrichtung zur wahlfreien Einstellung eines absoluten Null- oder Referenzpunktes bekannt. Diese Einrichtung besteht aus einem Untersetzungsgetriebe, das antriebsseitig mit der Welle des Winkelkodierers und abtriebsseitig mit einer Scheibe gekuppelt ist, die eine optoelektronisch abtastbare Bohrung oder Lichtreflexmarke aufweist. Die Scheibe ist ein Zahnrad, das über eine Rutschkupplung mit dem Untersetzungsgetriebe gekuppelt ist und sich von außen mittels eines mit Ritzel versehenen Zahnschlüssels verstellen läßt. Dadurch kann der absolute Nullpunkt für den inkrementalen Winkelgeber eingestellt werden.

Bei dieser Anordnung sind die Scheibe des Winkelkodierers, das als Planetengetriebe ausgebildete Untersetzungsgetriebe und das Zahnrad axial hintereinander angeordnet. Damit ergibt sich eine unerwünscht große Baulänge, die der Unterbringung in einem flachen Gehäuse entgegensteht.

Die DE-A-2 659 760 zeigt eine Anordnung zum Anzeigen der Winkelstellung eines drehbaren, mit einer Welle versehenen Teils, beispielsweise eines Druckkopfes einer Büromaschine. Es wird dort die Drehbewegung der Welle, welche die Eingangswelle der Anordnung darstellt, mittels eines Zahnradgetriebes übersetzt auf eine zweite Welle übertragen. Auf der zweiten Welle sitzt eine Trommel mit einem photoelektrisch arbeitenden, inkrementalen Winkelkodierer. Auf diese Weise entspricht einer vollen Umdrehung der Trommel entsprechend dem Übersetzungsverhältnis nur eine Teilumdrehung der Eingangswelle. Es können daher mit relativ groben Winkelinkrementen der Trommel kleine Winkelinkremente der Eingangswelle erfaßt werden. Um einen Nullpunkt zu erhalten, der einer bestimmten Stellung der Eingangswelle entspricht, ist innerhalb der Trommel eine zweite Trommel angeordnet, die auf der zweiten Welle drehbar gelagert und mit dieser über ein im Inneren der zweiten Trommel angeordnetes Untersetzungsgetriebe gekuppelt ist. Die Untersetzung ist so gewählt, daß die zweite Trommel sich um den gleichen Winkel dreht wie die Eingangswelle. Die zweite Trommel wird ebenfalls photoelektrisch abgetastet und liefert den Nullpunkt.

Bei beiden Anordnungen nach DE-A-3 325 318 und DE-A-2 659 760 handelt es sich um inkrementale Winkelgeber, die entweder direkt - bei der DE-A-3 325 318 - oder - bei der DE-A-2 659 760 - über ein Übersetzungsgetriebe über mehrere Umdrehungen angetrieben werden. Die über ein Untersetzungsgetriebe angetriebenen Glieder sind keine Winkelgeber sondern liefern nur einen Nullpunkt. Es geht nicht um einen Winkelgeber mit einem Rotor, der mit einem Stator zur Erzeugung eines drehwinkelabhängigen Ausgangssignals über einen begrenzten Winkelbereich zusammenwirkt und um die Unterbringung eines solchen Winkelgebers nebst Untersetzungsgetriebe in einem flachen Gehäuse.

Durch die US-A-3 772 675 ist ein digitaler Drehwinkelgeber bekannt, bei welchem magnetische Marken auf Codierscheiben durch entsprechende Sensoren abgegriffen werden. Auf einer Eingangswelle ist eine erste Codierscheibe starr angebracht. Eine zweite, von der Eingangswelle mit Untersetzung anzutreibende Codierscheibe ist mit einer Nabe verbunden, die drehbar auf der Eingangswelle gelagert ist. Die Nabe wird von der Eingangswelle über ein Untersetzungsgetriebe angetrieben. Das Untersetzungsgetriebe enthält je eine Außenverzahnung an der Eingangswelle und an der Nabe sowie zwei miteinander verbundenen Zahnräder, von denen eines mit der Außenverzahnung der Eingangswelle und das andere mit der Außenverzahnung der Nabe in Eingriff ist. In dem Gehäuse ist vor der Stirnseite dieser Anordnung eine Elektronikeinheit angeordnet.

Durch "Patents Abstracts of Japan" Bd 6, No 188 (P-144)(1066) zu der JP-A-57 98 801 ist eine Winkelmeßanordnung bekannt, bei welcher ein Drehwinkel eines Drehtisches mit hoher Genauigkeit unter Verwendung eines billigen Drehwinkelgebers geringer Auflösung gemessen werden soll. Das geschieht in der Weise, daß zwischen dem Drehtisch und dem Drehwinkelgeber ein spielfreies Zahnradgetriebe eingeschaltet ist. Die Spielfreiheit wird dadurch erreicht, daß ein mit dem Drehwinkelgeber verbundenes Getriebzahnrad aus zwei gleichachsigen, übereinstimmenden Zahnrädern aufgebaut ist, die durch eine Feder in Umfangsrichtung gegeneinander vorgespannt sind. Dieses Getriebezahnrad ist mit einem Zahnrad in Eingriff, das mit dem Drehtisch unmittelbar verbunden ist. Es erfolgt dabei eine Übersetzung zwischen der Bewegung des Drehtisches und der Bewegung des Drehwinkelgebers.

## Offenbarung der Erfindung

Der Erfindung liegt die Aufgabe zugrunde, einen Winkelgeber der eingangs genannten Art so auszubilden, daß seine axialen Abmessungen möglichst gering werden.

Erfindungsgemäß wird diese Aufgabe dadurch gelöst, daß

(f) die Eingangswelle in dem flachen Gehäuse gelagert ist und eine Außenverzahnung aufweist,

(g) der Rotor

- eine Nabe enthält, die auf der Eingangswelle neben deren Außenverzahnung drehbar gelagert ist, sowie

- einen ringscheibenförmigen Mittelteil, der sich an das der Außenverzahnung benachbarte Ende der Nabe anschließt, und

- einen zylinderringförmigen Umfangsteil, der sich an den Mittelteil längs dessen Umfang auf der der Nabe abgewandten Seite anschließt und in den von der Spule des Stators umschlossenen Raum hineinragt, und der einerseits den mit der Spule des Stators zur Erzeugung des Ausgangssignals zusammenwirkenden Anker und andererseits eine Innenverzahnung aufweist,

(h) im Gehäuse Zahnradmittel drehbar gelagert sind, die in den von Umfangsteil, Mittelteil und Eingangswelle begrenzten Ringraum hineinragen und einerseits mit der Außenverzahnung der Eingangswelle und andererseits mit der Innenverzahnung des zylinderringförmigen Umfangsteils in Eingriff sind, und

(i) signalverarbeitende elektronische Bauelemente in einem Ringraum angeordnet sind, der zwischen dem Mittelteil des Rotors und einem Deckelteil des Gehäuses um die Nabe herum gebildet ist.

Es wird auf diese Weise ein in dem flachen Gehäuse sowieso vorhandener Raum für die Aufnahme des Untersetzungsgetriebes ausgenutzt. Es ist nicht erforderlich, an das flache Gehäuse noch ein weiteres Gehäuse mit Eingangswelle und Untersetzungsgetriebe anzusetzen.

Im Gegensatz zu der geschilderten bekannten Anordnung ist die über wenigstens 360° verdrehbare, mit dem Rotor über das Untersetzungsgetriebe gekuppelte Eingangswelle selbst in dem besagten flachen Gehäuse gelagert und nicht eine mit dem Rotor starr verbundene, praktisch nur über einen begrenzten Winkel verdrehte Welle. Der Rotor ist im Gegensatz zu der DE-A-32 12 149 nicht starr mit einer Welle verbunden sondern drehbar auf der Eingangswelle gelagert. Das Untersetzungsgetriebe sitzt nicht in einem gesonderten Gehäuse, sondern innerhalb des flachen Gehäuses, das auch den Stator und den Rotor enthält. Es ergibt sich dadurch ein sehr raumsparender Winkelgeber mit geringen axialen Abmessungen.

Ausgestaltungen der Erfindung sind Gegenstand der Unteransprüche.

## Kurze Beschreibung der Zeichnungen

Ein Ausführungsbeispiel der Erfindung ist nachstehend unter Bezugnahme auf die zugehörigen Zeichnungen näher erläutert:

Fig. 1     zeigt abgebrochen einen Schnitt durch einen Winkelgeber der vorliegenden Art.

Fig. 2     ist eine schematische Draufsicht des Winkelgebers.

Fig. 3     zeigt die zugehörige Schaltung.

## Bevorzugte Ausführungen der Erfindung

Der Winkelgeber enthält ein flaches Gehäuse 10. In dem flachen Gehäuse 10 ist ein Stator 12 angeordnet. Weiterhin ist in dem Gehäuse 10 ein Rotor 14 relativ zu dem Stator 12 drehbar gelagert. Der Rotor 14 wirkt mit dem Stator 12 zur Erzeugung eines drehwinkelabhängigen Ausgangssignals über einen begrenzten Winkelbereich zusammen. Eine Eingangswelle 16 ist mit dem Rotor 14 über ein Untersetzungsgetriebe 18 gekuppelt.

Die Eingangswelle 16 ist in dem besagten flachen Gehäuse 10 gelagert. Der Rotor 14 ist drehbar auf der Eingangswelle 16 gelagert. Das Untersetzungsgetriebe 18 ist innerhalb des flachen Gehäuses 10 in einem zwischen Rotor 14 und Eingangswelle 16 gebildeten Ringraum 20 angeordnet. Das Untersetzungsgetriebe 18 enthält eine Außenverzahnung 22 an der Eingangswelle 16 sowie eine Innenverzahnung 24 an dem Rotor 14 konzentrisch zu der Eingangswelle 16 und im Abstand von dieser und im Gehäuse 10 drehbar gelagerte Zahnradmittel 26, die einerseits mit der Außenverzahnung 22 der Eingangswelle 16 und andererseits mit der Innenverzahnung 24 des Rotors 14 in Eingriff sind.

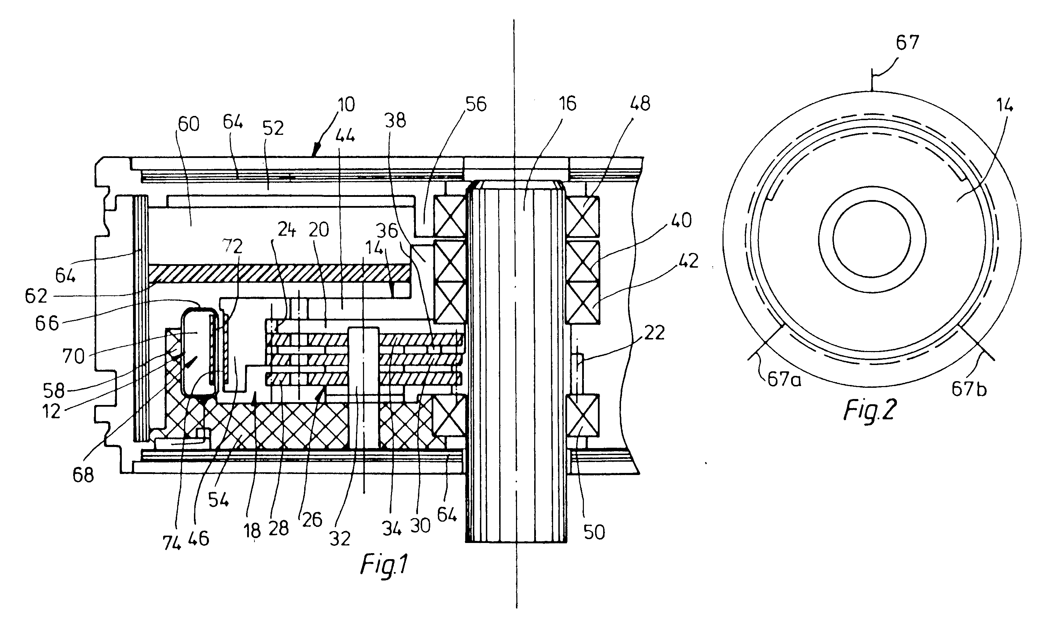

Die Zahnradmittel 26 weisen zur spielfreien Übertragung der Drehbewegung ein erstes und ein zweites, damit gleichartiges Zahnrad 28 bzw. 30 auf, die drehbar auf einer gehäusefesten Achse 32 gelagert sind. Das erste und das zweite Zahnrad 26 bzw. 30 sind durch (Fig.1) elastische Glieder so miteinander verbunden, daß in einer Ruhestellung ihre Zähne geringfügig gegeneinander winkelversetzt sind. Die Zahnräder können dann unter Vorspannung der elastischen Glieder so mit der Außenverzahnung 22 der Eingangswelle 16 in Eingriff gebracht werden, daß jeweils die Flanke eines Zahnes des ersten Zahnrades• 28 an einem Zahn der Außenverzahnung 22 federnd anliegt und die gegenüberliegende Flanke des entsprechenden Zahns des zweiten 30 sich federnd an den benachbarten Zahn der Außenverzahnung 22 anlegt. Auf diese Weise erfolgt eine spielfreie Übertragung der Drehbewegung der Eingangswelle 16 auf das erste und das zweite Zahnrad 28 und 30. Die Zahnradmittel 26 enthalten weiterhin ein drittes Zahnrad 34, das ebenfalls drehbar auf der gehäusefesten Achse 32 gelagert ist. Das dritte Zahnrad 34 ist frei von der Außenverzahnung 22 der Eingangswelle 16, also mit dieser Außenverzahnung 22 nicht in Eingriff. Es ist durch elastische Glieder 36 so mit dem benachbarten zweiten Zahnrad 30 verbunden, daß in einer Ruhestellung ihre Zähne geringfügig gegeneinander winkelversetzt sind. Das zweite und dritte Zahnrad 30 bzw. 34 stehen mit der Innenverzahnung 24 des Rotors 14 in Eingriff, wobei durch eine Vorspannung der elastischen Glieder 36 wieder in der beschriebenen Weise eine Spielfreiheit erzeugt wird.

Der Rotor 14 enthält eine Nabe 38, die neben der Außenverzahnung 22 der Eingangswelle 16 mittels zweier Wälzlager 40 und 42 drehbar auf der Eingangswelle 16 gelagert ist. An die Nabe 38 schließt sich ein ringscheibenförmiger Mittelteil 44 an. Der ringscheibenförmige Mittelteil sitzt an dem der Außenverzahnung 22 benachbarten Ende der Nabe 38, also am unteren Ende der Nabe 38 in Fig.1. An den Mittelteil 44 schließt sich längs dessen Umfangs auf der der Nabe 38 abgewandten Seite ein Umfangsteil 46 von zylindrischer Grundform an. Die Innenverzahnung 24 ist an diesem Umfangsteil 46 auf dessen Innenseite vorgesehen. Die Zahnradmittel 26 ragen in den von Umfangsteil 46, Mittelteil 44 und Eingangswelle 16 begrenzten Ringraum 20 hinein.

Die Eingangswelle 16 ist in Wälzlagern 48 und 50 in Deckelteilen 52 bzw. 54 des Gehäuses 10 gelagert. Der Deckelteil 52 weist dabei einen Kragen 56 auf, in welchem das Lager 48 sitzt. Der Deckelteil 54 weist längs seines Außenrandes einen Kragen 58 auf, in welchem der Stator 12 gehaltert ist. In dem Deckelteil 54 sitzt auch die Achse 32. Die Nabe 38 des Rotors 14 und die Außenverzahnung 22 der Eingangswelle 16 sind zwischen den Wälzlagern 48 und 50 auf der Eingangswelle 16 angeordnet. Es wird ein weiterer Ringraum 60 zwischen dem Mittelteil 44 des Rotors 14 und dem Deckelteil 52 des Gehäuses 10 um die Nabe 38 herum gebildet. Signalverarbeitende elektronische Baulemente einer das Winkelsignal liefernden Schaltungsanordnung sind auf einer ringförmigen Leiterplatte 62 in diesem Ringraum 60 angeordnet. Das Gehäuse 10 ist mit einer magnetischen Abschirmung 64 aus Mumetall versehen.

Auf diese Weise ist nicht nur das Getriebe 18 in dem flachen Gehäuse 10 untergebracht. Das Gehäuse 10 enthält auch die Bauteile der signalverarbeitenden Schaltung.

Bei der dargestellten Ausführung weist der Stator 12 eine auf einem Kreisbogen gewickelte Spule 66 mit Mittenanzapfung 67 und Spulenenden 67a,67b und einem wenigstens teilweise ferromagnetischen Kern 68 auf. Der Rotor 14 weist einen wenigstens teilweise ferromagnetischen Anker auf, der die Spule 66 innen in einer nur das Streufeld beeinflussenden Weise umgreift. Es ist eine Schaltungsanordnung mit auf der Leiterplatte 62 montierten Bauelementen vorgesehen, welche auf Änderungen der Induktivitäten der beiderseits der Mittenanzapfung gebildeten Spulenteile zur Bildung eines Winkelsignals anspricht. Der Kern 68 ist von einem Ring 70 aus unmagnetischem Material, z.B. Aluminium, von im wesentlichen rechteckigem Querschnitt gebildet. In den Ring 70 ist als Anker auf der Innenseite ein Streifen 72 aus ferromagnetischem Material eingesetzt. Der Rotor 14 weist den dicht innerhalb der Spule 66 drehbeweglichen Umfangsteil 46 auf, in dessen der Spule 66 zugewandter Mantelfläche auf einem Teil des Umfangs ein Streifen 74 aus ferromagnetischem Material eingesetzt ist. Der Rotor 14 ist über 360° hinaus durchdrehbar in dem Gehäuse 10 angeordnet. Es sind also keine Anschläge vorgesehen, die zu einer Beschädigung oder Dejustierung des Winkelgebers Anlaß geben können.

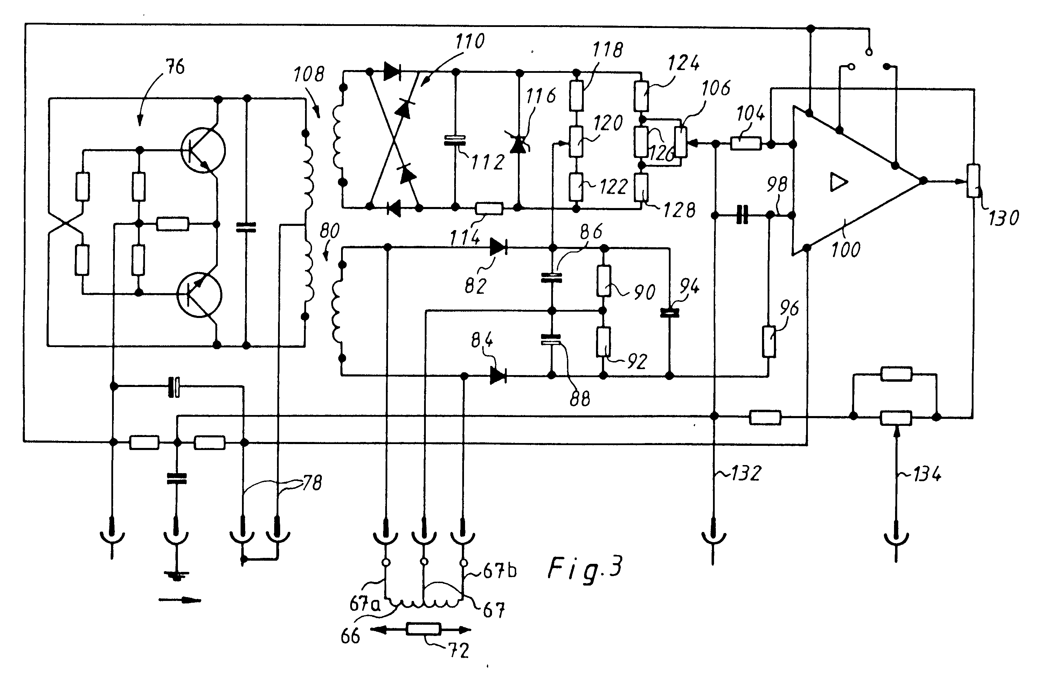

Die zugehörige Schaltung ist in Fig.3 dargestellt und entspricht der Schaltung der DE-A-3 212 149.

Ein Oszillator 76, der von einer Versorgungsgleichspannung an Klemmen 78 gespeist wird, liefert eine Wechselspannung an einem Transformator 80. Diese Wechselspannung erzeugt Ströme durch die beiden Hälften der Spule 66. Diese Ströme hängen von den Induktivitäten der beiden Hälften und damit von der Stellung des Ankers 72 ab. Die Ströme werden durch Dioden 82 bzw. 84 gleichgerichtet und laden Kondensatoren 86 bzw. 88 auf. Zu den Kondensaotren 86 und 88 ist je ein ohmscher Widerstand 90 bzw. 92 parallelgeschaltet. Die Kondensatoren 86 und 88 sind mit ihren Spannungen gegeneinandergeschaltet. Wenn die Induktivitäten in den beiden Hälften der Spule 66 gleich sind, werden die Kondensatoren 86 und 88 symmetrisch aufgeladen, und die resultierende Gleichspannung ist null. Bei einer Unsymmetrie werden auch die Kondensatorspannungen unsymmetrisch. Es erscheint eine resultierende Gleichspannung von entweder positivem oder negativem Vorzeichen je nach der Richtung der Winkelauslenkung. Diese Gleichspannung wird durch einen Kondensator 94 geglättet.

Die Gleichspannung liegt über einen Widerstand 96 an einem Eingang 98 eines Operationsverstärkers 100. An einem anderen Eingang 102 des Operationsverstärkers 100 liegt über einen Widerstand 104 eine Spannung, die an einem Potentiometer 106 abgegriffen wird. Die Speisespannung für das Potentiometer 106 wird erhalten über einen von dem Oszillator 70 gespeisten Transformator 108 und eine Gleichrichterbrücke 110. Die gleichgerichtete Wechselspannung wird durch einen Kondensator 112 geglättet. Die erhaltene Gleichspannung wird durch eine Stabilisatorschaltung mit einem Widerstand 114 und einer Zenerdiode 116 stabilisiert.

An der stabilisierten Spannung liegt eine Kette mit einem Widerstand 118, einem Potentiometer 120 und einem Widerstand 122. Der Schleifer des Potentiometers 120 ist mit einer Seite des Kondensators 94 verbunden. Es wird so ein Referenzpunkt für die auf den Operationsverstärker geschalteten Spannungen geschaffen. Parallel zu der Kette 118,120,122 liegt eine Kette mit drei Widerständen 124,126,128. Das Potentiometer 106 liegt an dem mittleren Widerstand 126.

Ein Potentiometer 130, dessen Schleifer mit dem Ausgang des Operationsverstärkers 100 verbunden ist, gestattet eine Einstellung der Gegenkopplung und damit des Verstärkungsgrades. Die Ausgangsspannung wird zwischen Klemmen 132,134 abgegriffen.

**Patentansprüche**

1.  Winkelgeber enthaltend
    (a) ein flaches Gehäuse (10),
    (b) einen in dem flachen Gehäuse (10) angeordneten Stator (12) mit einer auf einem Kreisbogen gewickelten Spule (66),
    (c) einen in dem Gehäuse (10) relativ zu dem Stator (12) drehbar gelagerten Rotor (14) mit einem Anker, der mit der Spule des Stators (12) zur Erzeugung eines drehwinkelabhängigen Ausgangssignals über einen begrenzten Winkelbereich zusammenwirkt,
    (d) eine Eingangswelle (16) und

(e) ein Untersetzungsgetriebe (18), über welches die Eingangswelle mit dem Rotor (14) gekuppelt ist,

**dadurch gekennzeichnet, daß**

(f) die Eingangswelle (16) in dem flachen Gehäuse (10) gelagert ist und eine Außenverzahnung (22) aufweist,

(g) der Rotor (14)

- eine Nabe (38) enthält, die auf der Eingangswelle (16) neben deren Außenverzahnung drehbar gelagert ist, sowie

- einen ringscheibenförmigen Mittelteil (44), der sich an das der Außenverzahnung (22) benachbarte Ende der Nabe (38) anschließt, und

- einen zylinderringförmigen Umfangsteil (46), der sich an den Mittelteil (44) längs dessen Umfang auf der der Nabe abgewandten Seite anschließt und in den von der Spule des Stators umschlossenen Raum hineinragt, und der einerseits den mit der Spule des Stators zur Erzeugung des Ausgangssignals zusammenwirkenden Anker und andererseits eine Innenverzahnung (24) aufweist,

(h) im Gehäuse (10) Zahnradmittel (26) drehbar gelagert sind, die in den von Umfangsteil (46), Mittelteil (44) und Eingangswelle (16) begrenzten Ringraum (20) hineinragen und einerseits mit der Außenverzahnung (22) der Eingangswelle (16) und andererseits mit der Innenverzahnung (24) des zylinderringförmigen Umfangsteils (46) in Eingriff sind, und

(i) signalverarbeitende elektronische Bauelemente in einem Ringraum (60) angeordnet sind, der zwischen dem Mittelteil (44) des Rotors (14) und einem Deckelteil (52) des Gehäuses (10) um die Nabe (38) herum gebildet ist.

2. Winkelgeber nach Anspruch 1, dadurch gekennzeichnet, daß

(a) die Zahnradmittel (26) zur spielfreien Übertragung der Drehbewegung ein erstes und ein zweites, damit gleichartiges Zahnrad (28,30) aufweisen, die drehbar auf einer gehäusefesten Achse (32) gelagert sind und durch elastische Glieder so miteinander verbunden sind, daß in einer Ruhestellung ihre Zähne geringfügig gegeneinander winkelversetzt sind

(b) das erste und das zweite Zahnrad (28,30) mit der Außenverzahnung (22) der Eingangswelle (16) in Eingriff stehen,

(c) die Zahnradmittel (26) weiterhin ein drittes Zahnrad (34) aufweisen, das ebenfalls drehbar auf der gehäusefesten Achse (32) gelagert, frei von der Außenverzahnung (22) der Eingangswelle (16) und durch elastische Glieder (36) so mit dem benachbarten zweiten Zahnrad (30) verbunden ist, daß in einer Ruhestellung ihre Zähne geringfügig gegeneinander winkelversetzt sind, und

(d) das zweite und das dritte Zahnrad (30,34) mit der Innenverzahnung (24) des Rotors (14) in Eingriff stehen.

3. Winkelgeber nach Anspruch 1, **dadurch gekennzeichnet, daß**

(a) die Spule (68) mit einer Mittenanzapfung versehen und auf einen Kern (66) gewickelt ist, der von einem Ring (70) aus unmagnetischem Material von im wesentlichen rechteckigem Querschnitt gebildet ist, in welchen auf der Innenseite ein Streifen (72) aus ferromagnetischem Material eingesetzt ist,

(b) der dicht innerhalb der Spule (68) drehbewegliche zylinderringförmige Umfangsteil (46) in seiner der Spule (68) zugewandten Mantelfläche auf einem Teil des Umfangs einen eingesetzten Streifen aus ferromagnetischem Material aufweist, wobei dieser Streifen nur das Streufeld der Spule beeinflußt, und

(c) eine Schaltungsanordnung vorgesehen ist, welche auf Änderungen der Induktivitäten der beiderseits der Mittenanzapfung (67) gebildeten Spulenteile anspricht.

**Claims**

1. Angle transmitter containing

(a) a flat housing (10),

(b) a stator (12) arranged in the flat housing (10) and including a coil (66) wound along a circular arc,

(c) a rotor (14) rotatably supported relative to the stator (12) in the housing (10) and having an armature cooperating with the coil of the stator (12) for producing an output signal dependent upon the rotational angle through a limited angular range,

(d) an input shaft (16) and

(e) a reducing gear (18) by means of which the input shaft (16) is coupled to the rotor (14),

characterised in that

(f) the input shaft (16) is journalled in the flat housing (10) and has an outer toothing (22),

(g) the rotor (14)

- contains a hub (38) rotatably journalled at the input shaft (16) adjacent the outer toothing thereof, as well as
- an annular disc-shaped central portion (44) adjoining the end of the hub (38) which end is adjacent to the outer toothing (22), and
- a cylindrical annular-shaped circumferential portion (46) adjoining the central portion (44) along its circumference on the side remote from the hub and protruding into the space enclosed by the coil of the stator, said circumferential portion including, on the one hand, the armature which cooperates with the coil of the stator for producing the output signal, and an internal toothing (24), on the other hand,

(h) in the housing (10), rotatably supported gear means (26) protruding into the annular space (20) bounded by the circumferential portion (46), the central portion (44) and the input shaft (16), and meshing with the external toothing (22) of the input shaft (16), on the one hand, and the internal toothing (24) of the cylindrical annular-shaped circumferential portion (46), on the other hand, and

(i) signal processing electronic components disposed in an annular space (60) formed around the hub (38) between the central portion (44) of the rotor (14) and a cover member (52) of the housing (10).

2. Angle transmitter according to claim 1, characterised in that

(a) the gear means (26) comprise, for play-free transmission of the rotational movement, a first gear wheel and a second gear wheel (28, 30) similar thereto which are rotatably journalled at an axle (32) fixed relative to the housing and interconnected by means of elastic members such that their teeth are slightly angularly offset from each other in an idle position,

(b) the first and the second gear wheel (28, 30) are in mesh with the external toothing (22) of the input shaft (16),

(c) the gear means (26) further comprise a third gear wheel (34) which is also rotatably journalled at the axle (32) fixed relative to the housing, free of the external toothing (22) of the input shaft (16) and connected with the adjacent second gear wheel (30) by means of elastic members (36) such that their teeth are slightly angularly offset from each other in an idle position, and

(d) the second and the third gear wheel (30, 34) are in mesh with the internal toothing (24) of the rotor (14).

3. Angle transmitter according to claim 1, characterised in that

(a) the coil (68) contains a central tap and is wound upon a core (66) which is formed by a ring (70) made of non-magnetic material of substantially rectangular cross-section and into which a strip (72) of ferromagnetic material is inserted on the inside,

(b) the cylindrical annular-shaped circumferential portion (46) is rotatably movable closely within the coil (68) and has inserted into its outer surface facing the coil, in part of its circumference a strip (74) of ferromagnetic material which only affects the stray field of the coil, and

(c) a circuit arrangement is provided which responds to inductance changes of the coil portions formed on both sides of the central tap (67).

## Revendications

1. Capteur angulaire comprenant

(a) un boîtier plat (10),

(b) un stator (12) disposé dans le boîtier plat (10) et muni d'une bobine (66) enroulée sur un arc de cercle,

(c) un rotor (14) monté de sorte à pouvoir tourner dans le boîtier (10) relativement au stator (12) et muni d'un induit coopérant avec la bobine du stator (12) afin d'engendrer un signal de sortie en fonction de l'angle de rotation sur une zone angulaire limitée,

(d) un arbre d'entrée (16), et

(e) un démultiplicateur (18) par lequel l'arbre d'entrée est couplé au rotor (14), caractérisé par le fait que

(f) l'arbre d'entrée (16) est monté dans un boîtier plat (10) et présente une denture extérieure (22),

(g) le rotor (14)

- comprend un moyeu (38) monté rotativement sur l'arbre d'entrée (16) à côté de la denture extérieure, ainsi que

- une partie centrale (44) en forme de disque annulaire faisant suite à l'extrémité du moyeu (38), qui est adjacente à la denture extérieure (22), et

- une partie circonférentielle (46) en forme de cylindre qui fait suite à la partie centrale (44) le long de sa circonférence sur le côté opposé au moyeu, et qui s'étend dans l'espace enfermé par la bobine du stator, et qui présente d'un côté l'induit coopérant avec la bobine du stator afin d'engendrer le signal de sortie, et de l'autre côté une denture intérieure (24),

(h) des moyens de roue dentée (26) sont montés rotativement dans le boîtier (10), et s'étendent dans l'espace annulaire (20) définie par la partie circonférentielle (46), la partie centrale (44) et l'arbre d'entrée (16), et s'engrènent d'un côté dans la denture extérieure (22) de l'arbre d'entrée (16) et de l'autre côté dans la denture intérieure (24) de la partie circonférentielle (46) en forme de cylindre, et

(i) des composantes électroniques de traitement de signal sont disposées dans un espace annulaire (60) formé entre la partie centrale (44) du rotor (14) et un élément de couvercle (52) du boîtier (10) autour du moyeu (38).

2.    Capteur angulaire selon la revendication 1, caractérisé par le fait que

(a) afin de transmettre le mouvement rotatif sans jeu, les moyens de roue dentée (26) présentent une première roue dentée (28) et une seconde roue dentée (30) similaire à celle-ci, qui sont montées rotativement sur un axe (32) fixe par rapport au boîtier, et qui sont reliées par des membres élastiques de sorte que dans une position d'arrêt leurs dents sont légèrement déplacés l'un par rapport à l'autre,

(b) la premiüre et la seconde roue dentäe (28, 30) se sont engrenäes dans la denture extärieure (22) de l'arbre d'enträe (16),

(c) les moyens de roue dentäe (26) präsentent, en outre, une troisiüme roue dentäe qui est ägalement montäe rotativement sur l'axe (32) fixe par rapport au boîtier, et qui est reliäe à la seconde roue dentäe (30) adjacente libre de la denture extärieure (22) de l'arbre d'enträe (16) et par des membres älastiques (36) de sorte que dans une position d'arrêt leurs dents sont lägürement däcaläs l'un par rapport à l'autre, et

(d) la seconde et la troisiüme roue dentäe (30, 34) se sont engrenäes dans la denture intärieure (24) du rotor (14).

3.    Capteur angulaire selon la revendication 1, caractérisé par le fait que

(a) la bobine (68) est munie d'une prise médiane et enroulée sur un noyeu (66) formé par un anneau (70) d'une matière nonmagnétique d'une section transversale en forme généralement rectangulaire, dans lequel une bande (72) en matière ferromagnétique est insérée sur le côté intérieur,

(b) la partie circonférentielle (46) en forme de cylindre, et rotative étroitement à l'intérieur de la bobine (68) présente dans la surface latérale en face de la bobine (68) sur une partie de la circonférence, une bande insérée en matière ferromagnétique qui n'influence que le champs de dispersion de la bobine, et

(c) une disposition de circuit répondant à des variations des inductivités des parties de bobine formées sur les deux côtés de la prise médiane (67).

Fig.2

Fig.1

Fig. 3